Europäisches Patentamt

European Patent Office

Office européen des brevets

(11) Veröffentlichungsnummer: **0 081 511**
**B1**

(12) **EUROPÄISCHE PATENTSCHRIFT**

(45) Veröffentlichungstag der Patentschrift:
**02.04.86**

(21) Anmeldenummer: **82901713.6**

(22) Anmeldetag: **17.06.82**

(86) Internationale Anmeldenummer:
**PCT/CH 82/00079**

(87) Internationale Veröffentlichungsnummer:
**WO 82/04401 (23.12.82** Gazette 82/30)

(51) Int. Cl.⁴: **A 63 C 11/02**

(54) **VORRICHTUNG ZUM MITFÜHREN VON SKIS.**

(30) Priorität: **18.06.81 CH 4056/81**

(43) Veröffentlichungstag der Anmeldung:
**22.06.83 Patentblatt 83/25**

(45) Bekanntmachung des Hinweises auf die Patenterteilung:
**02.04.86 Patentblatt 86/14**

(84) Benannte Vertragsstaaten:
**AT CH DE FR GB LI SE**

(56) Entgegenhaltungen:
**CH - A - 418 201**
**CH - A - 451 775**
**CH - A - 581 487**
**DE - C - 486 818**
**FR - A - 2 310 781**
**US - A - 3 861 701**

(73) Patentinhaber: **KYBURZ, Hans, Bruggweg 40,
CH-4143 Dornach (CH)**

(72) Erfinder: **KYBURZ, Hans, Bruggweg 40,
CH-4143 Dornach (CH)**

(74) Vertreter: **Lins, Edgar, Dipl.-Phys. et al, Patentanwälte
Gramm + Lins Theodor-Heuss-Strasse 2,
D-3300 Braunschweig (DE)**

## Beschreibung

Die Erfindung betrifft eine Vorrichtung zum Mitführen von Skis, die an dem den Spitzen gegenüberliegenden Endabschnitt eines Skipaares lösbar angebracht wird, mit einer drehbar gelagerten Rolle, die bei angehobenen Skispitzen das Abrollen der Skienden auf dem Boden gestattet, wobei die Rolle in einem Halter zwischen zwei von einem Steg nach unten ragenden Seitenwangen gelagert ist, der Halter den Konturen der unteren Skiabschnitte angepasste Anschläge aufweist und ferner ein Halteorgan vorgesehen ist, das den Halter an dem Endabschnitt des Skipaares sichert.

Der Transport von Skis durch Fussgänger ist bekanntlich eine gefährliche Angelegenheit, zumal wenn die Skis wie üblich so auf der Schulter getragen werden, dass die Skistpitzen praktisch in Kopfhöhe nach hinten ragen. Um das damit verbundene Verletzungsrisiko zu vermindern, ist bereits vorgeschlagen worden, an dem den Spitzen gegenüberliegenden Endabschnitt eines Skipaares eine lose drehbar gelagerte Rolle anzubringen. Durch die CH-A- 581 487 ist eine derartige Vorrichtung bekannt, die auf die Skienden aufsteckbar ist. In einer besonderen Ausführungsform sind zwei nach oben offene Aufnahmen für die beiden Skienden des Skipaares vorgesehen, um die ein Sicherungsteil herum ragt. Der Boden der beiden Aufnahmen dient als Anschlag für die unteren Skienden. Von ihm aus erstrecken sich zwei Seitenwangen nach unten, zwischen denen eine Rolle gelagert ist. Mit einer derartigen Vorrichtung lassen sich Skis zwar transportieren, es entsteht jedoch ein Nachteil beim vorübergehenden Abstellen der Skis, z.B. an einer Gebäudewand. Selbst wenn die Skis so abgestellt werden, dass die Rollenachse senkrecht zu Gebäudewand steht, genügt ein kleiner seitlicher Anstoss, um ein Wegrollen der unteren Skienden zu verursachen, so dass die Skis umfallen.

Durch die CH-A- 451 775 ist eine Vorrichtung zum Mitführen von Skis bekannt, die ein Abstellen der Skis mit der Transportvorrichtung erlaubt, ohne dass die unmittelbare Gefahr des Wegrollens besteht. Hierzu ist eine sehr kleine Rolle vorgesehen, die an einer seitlichen Kante des Halters sitzt. Auf der anderen seitlichen Kante des Halters befindet sich ein Stützklotz von einer derartigen Höhe, dass die Skis mit der Halterung lotrecht abgestellt werden können und somit sowohl auf der Rolle als auch auf dem Stützklotz stehen. Der Nachteil dieser Vorrichtung besteht darin, dass bei der vorgegebenen Breite des Halters, die nicht wesentlich grösser sein sollte als die Breite der Skienden, nur eine Rolle mit sehr kleinem Durchmesser verwendet werden kann. Dadurch wird nur ein sehr unkomfortabler Transport der Skis ermöglicht. Darüber hinaus hat die Rolle auch beim Abstellen der Skis ständig Bodenkontakt, so dass durch einen kleinen Anstoss am unteren Skiende auf der Seite der Rolle der Stützklotz abgehoben wird, wodurch es zum seitlichen Wegrollen der Skis kommt.

Der Erfindung liegt demgegenüber die Aufgabe zugrunde, eine Vorrichtung der eingangs erwähnten Art anzugeben, die einfach herstellbar ist und eine wirksame Sicherung gegen ein seitliches Wegrollen beim Abstellen der Skis gewährleistet, ohne hierdurch das Rollverhalten des Halters zu beeinträchtigen.

Diese Aufgabe wird erfindungsgemäss dadurch gelöst, dass die beiden Seitenwangen des Halters in Form einer Spitze nach unten bis unter die untere Rollenkante verlängert sind, um beim Abstellen der Skis deren Wegrollen zu verhindern.

Die Verlängerung zumindest einer der Seitenwangen in Form einer nach unten ragenden Spitze, die über die Rollenlauffläche ragt, erlaubt ein sicheres Abstellen der Skis, bei dem die Rolle keinen Kontakt mit dem Boden hat. Die Ausbildung der Seitenwangen in Form einer Spitze nutzt die Tatsache aus, dass beim Abrollen der Skis diese schräg gehalten werden, so dass die Spitze beim Transport der Skis schräg nach hinten weg ragt und dadurch nicht den Boden berührt, obwohl sie etwas über die Rolle herausragt. Erst beim Aufrechtstellen der Skis zum Zwecke des Abstellens bekommt die Spitze Bodenkontakt und bildet die Sicherung gegen seitliches Wegrollen.

In einer bevorzugten Ausführungsform ist eine die Rolle tragende Rollenachse in Aufnahmebohrungen der Seitenwangen eingesetzt. Dabei lassen sich die Seitenwangen zwecks Montage der Rolle auseinanderbiegen. Diese Ausbildung des Halters trägt der Tatsache Rechnung, dass durch die Verlängerung der Seitenwangen nach unten die Rolle durch die Seitenwangen weitgehend abgedeckt ist und sich daher nur schwierig montieren liesse. Durch die bevorzugte Ausführungsform lässt sich eine einfache Montage auch unter den erschwerten Umständen erreichen.

Während bei den bekannten Haltern die Rolle jeweils vollständig unterhalb der Aufnahme für die Skienden angeordnet ist, kann in einer besonders bevorzugten Ausführungsform der vorliegenden Erfindung der gegen das Skiende anliegende Anschlag unterhalb der Rollenachse angeordnet sein. Das bedeutet, dass die die Rolle haltenden Seitenwangen gleichzeitig auf ihren Aussenseiten die Aufnahmen für die Skienden bilden. Dadurch befindet sich die Rolle in der Transportstellung zwischen den Skienden, so dass die Skis durch den Halter nicht wesentlich verlängert werden. Die dadurch entstehenden günstigeren Hebelverhältnisse erleichtern das Aufstellen der Skier auf die Spitze der Seitenwangen zum Zwecke des Abstellens der Skis.

Die Erfindung soll im folgenden anhand eines in der Zeichnung dargestellten Ausführungsbeispiels näher erläutert werden. Es zeigen:

Figur 1 – eine Seitenansicht des Halters

Figur 2 – eine Stirnansicht zur Verdeutlichung der Befestigungsvorrichtung für die Skienden und der Lagerung der Rolle

Figur 3 – eine Ansicht auf den Halter gemäss Figur 2 nach seiner Montage auf die Skienden eines Skipaares

Figur 4 – einen Querschnitt durch die Skienden mit einer Ansicht auf den Halter in Richtung des Pfeiles IV in Figur 3

Figur 5 – eine Längsschnittdarstellung einer Lagerung der Rolle zwischen zwei Seitenwangen.

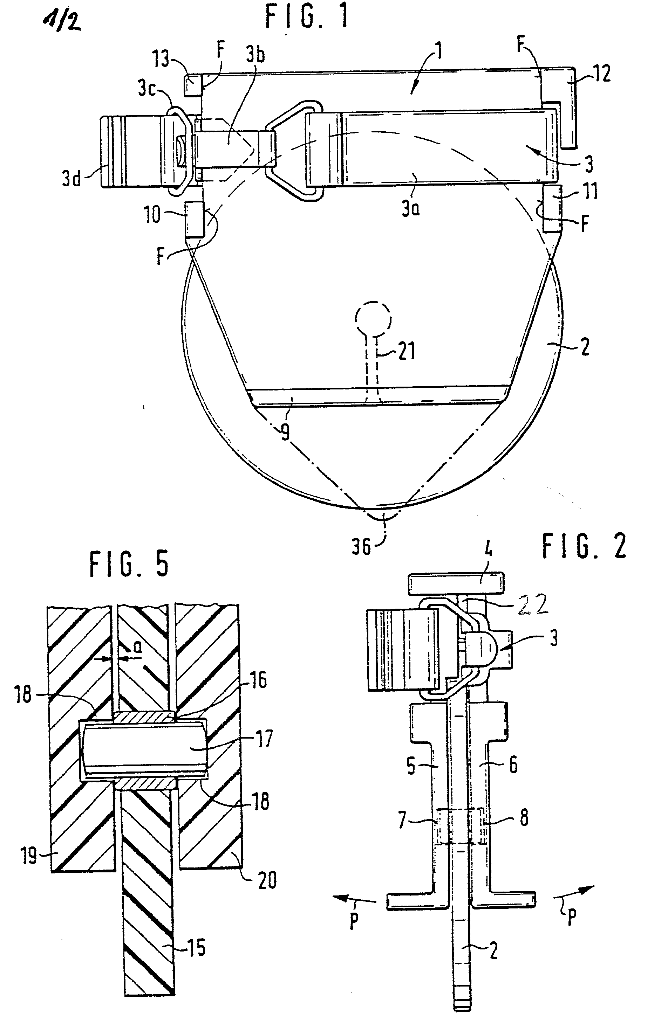

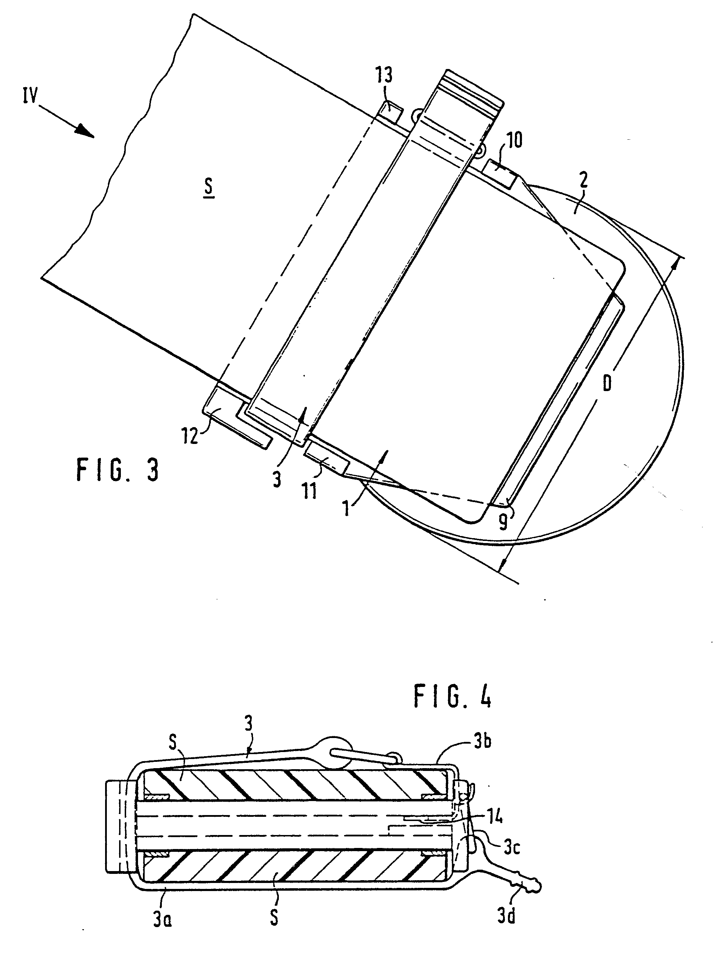

Am unteren Endabschnitt eines in Figur 3 mit S bezeichneten Skipaares ist eine Vorrichtung befestigt, die einen Halter 1, eine Rolle 2 und einen Sicherungsgurt 3 aufweist. Der Halter ist, wie insbesondere Figur 2 zeigt, von U-förmigen Querschnitt und weist demgemäss einen oberen Steg 4 auf, von dessen Unterseite zwei Seitenwangen 5 und 6 parallel nach unten ragen. Die beiden Seitenwangen 5 und 6 befinden sich in einem gegenseitigen Abstand, dass sie gerade Raum für die Einführung der Rolle 2 lassen. In jeder Seitenwange ist eine Sacklochbohrung 7 bzw. 8 (Figur 2) vorgesehen, in welche die Rollenachse hineinpasst. Die beiden Seitenwangen 5 und 6 sind in Bezug auf die Materialdicke und Materialart so gewählt, dass sie sich in Richtung der Pfeile P (Figur 2) etwas auseinanderbiegen lassen, wodurch die Montage der Rolle 2 ermöglicht wird. Das Material der beiden Seitenwangen 5, 6 ist daher so zu wählen, dass dieselben nach dem Auseinanderbiegen ihre ursprüngliche Lage elastisch wieder einnehmen.

An ihren der Rolle 2 abgewandten Aussenflächen weisen die beiden Seitenwangen 5, 6 Anschläge auf, deren Lage den Konturen des Skipaares S angepasst ist. So ragt von der Unterkante jeder Seitenwange eine Anschlagleiste 9 nach aussen, die an der unteren Skikante anliegt. Ferner sind an jeder Seitenwange vier weitere seitliche Anschläge 10, 11, 12 und 13 angeordnet, deren auf die Skikontur abgestimmte Anschlagflächen in Figur 1 mit F bezeichnet sind.

Dank dieser Ausbildung lässt sich der Halter 1 zwischen die unteren Endabschnitte der beiden Skis einschieben, bis die Anschlagleiste 9 gegen die unteren Skikanten auftreffen. Die Vorrichtung hat damit ihre zum Skitransport erforderliche Betriebslage erreicht und muss nun noch an dem Skipaar S gesichert werden.

Diese Sicherung erfolgt vorzugsweise mittels eines handelsüblichen Skisicherungsriemens 3, welcher, wie insbesondere Figur 4 zeigt, um beide Skis herumgelegt wird und die Skis dabei von aussen gegen den Halter 1 presst. Die in Figur 4 mit 14 bezeichnete Stahlzunge des Sicherungsriemens 3 ragt dabei in eine im Oberteil des Halters vorgesehene Nut 22.

Der Halter 1 wird vorzugsweise einteilig aus einem verschleissfesten Kunststoff, beispielsweise einem Polyamid, wie Nylon, hergestellt. Damit die Vorrichtung die beim Abrollen auf holperigem Weg auftretenden Stösse zum Teil absorbieren kann, besteht die Rolle 2 vorzugsweise aus einem elastischen Werkstoff, beispielsweise einem gummiartigen Thermoplast.

Der Rollendurchmesser D soll mindestens der halben Skibreite entsprechen, ist aber vorzugsweise etwas grösser als die Skibreite, damit die unteren Skikanten bei der schrägen Transportlage nicht am Boden streifen.

Ausgehend von der Anschlagleiste 9 sind die Wangen nach unten zu einer dreieckförmigen Spitze 36 verlängert, die über die Lauffläche der Rolle 2 hinausragt. Die Spitze 36 ist in Figur 1 gestrichelt dargestellt und in den Figuren 2, 3 und 5 aus Gründen der Übersichtlichkeit nicht eingezeichnet.

Wie Figur 3 zeigt, ragt die Rolle 2 bei der beschriebenen Halterung 1 nur um den Bruchteil des Rollendurchmessers D über die Skiunterkante bzw. die Anschlagleiste 9 hinaus. Die Anschlagleiste 9 befindet sich somit unterhalb der Rollenachse.

Der Skisicherungsriemen 3 weist in bekannter Weise einen Gummigurt 3a (Figuren 1 und 4), eine in sich um 180° umgebogene Metallzunge 3b, ein zum Einhängen dienendes, ösenförmiges Gegenstück 3c sowie eine zum Öffnen dienende Griffflasche 3d auf.

Auf den Innenflächen der beiden Wangen 5 und 6 können Führungsrillen 21 angeordnet sein, die das Einschieben der Rollenachse erleichtern.

Figur 5 verdeutlicht die mögliche Ausbildung einer Rollenlagerung. In diesem Ausführungsbeispiel ist eine Rolle 15 mit einer Nabe 16 versehen, in die eine Achse 17 lose eingeschoben ist. Die Achse 17 ragt beidseitig in Sacklochbohrungen 18 der beiden Wangen 19, 20 des Halters. Dank der Anordnung der Nabe 16 wird gewährleistet, dass die Rolle 15 stets einen gewissen Abstand a von der angrenzenden Wangenfläche hat. Da die Achse 17 nicht fest mit der Rolle 15 verbunden ist, kann sich die Rolle 15 unabhängig von der Reibung der Achse 17 in den Sacklochbohrungen 18 frei drehen. Die Nabe 16, auf der die Rolle 15 läuft, kann auch an der Innenfläche einer der beiden Wangen 19, 20 angebracht sein, wobei an der gegenüberliegenden Fläche der anderen Wange ein Zentrierzapfen vorgesehen sein kann, der in eine Zentrierbohrung der Nabe hineinragt.

**Patentansprüche**

1. Vorrichtung zum Mitführen von Skis, die an dem den Spitzen gegenüberliegenden Endabschnitt eines Skipaares (S) lösbar angebracht wird, mit einer drehbar gelagerten Rolle (2, 15), die bei angehobenen Skispitzen das Abrollen der Skienden auf dem Boden gestattet, wobei die Rolle (2, 15) in einem Halter (1) zwischen zwei von einem Steg nach unten ragenden Seitenwangen (5, 6; 19, 20) gelagert ist, der Halter (1) den Konturen der unteren Skiabschnitte angepasste Anschläge (9, 10, 11, 12, 13) aufweist und ferner ein Halteorgan (3) vorgesehen ist, das den Halter (1) an dem Endabschnitt des Skipaares (S) sichert, dadurch gekennzeichnet, dass die beiden Seitenwangen (5, 6; 19, 20) des Halters (1) in Form einer Spitze (36) nach unten bis unter die untere Rollenkante verlängert sind, um beim Abstellen der Skis deren Wegrollen zu verhindern.

2. Vorrichtung nach Anspruch 1, dadurch gekennzeichnet, dass eine die Rolle (2, 15) tragende Rollenachse (17) in Aufnahmebohrungen (7, 8; 18) eingesetzt ist und dass sich die Seitenwangen (5, 6; 19, 20) zwecks Montage der Rolle (2; 15) auseinanderbiegen lassen.

3. Vorrichtung nach Anspruch 1 oder 2, dadurch gekennzeichnet, dass der gegen das Skiende anliegende Anschlag (9) unterhalb der Rollenachse (17) angeordnet ist.

**Revendications**

1. Dispositif pour transporter des skis, destiné à être fixé de manière amovible à l'extrémité opposée aux pointes d'une paire de skis (S), comportant un galet (2, 15) monté rotativement qui permet le roulage des extrémités des skis sur le sol lorsque les pointes de ces skis sont relevées, ce galet (2, 15) étant monté dans un support (1) entre deux flasques (5, 6; 19, 20), ces flasques s'étendant d'une traverse vers le bas, le support (1) présentant des butées (9, 10, 11, 12, 13) qui sont adaptées aux contours des parties inférieures des skis, et en outre un organe de fixation (3) étant prévu pour bloquer le support (1) à l'extrémité de la paire de skis, caractérisé en ce que les deux flasques (5, 6; 19, 20) du support (1) se prolongent vers le bas sous la forme d'une pointe (36) jusqu'en dessous du bord inférieur de roulement dudit galet pour empêcher que les skis puissent rouler lorsqu'ils sont posés.

2. Dispositif conforme à la revendication 1, caractérisé en ce qu'un axe (17) de galet portant le galet (2, 15) est reçu dans des alésages (7, 8; 18) et en ce que les flasques (5, 6; 19, 20) peuvent se plier en s'écartant l'un de l'autre en vue du montage du galet (2, 15).

3. Dispositif conforme à la revendication 1, ou à la revendication 2, caractérisé en ce que la butée (9) qui est disposée contre l'extrémité de ski est placée en-dessous de l'axe (17) de galet.

**Claims**

1. Ski-transporting device, which is detachably fitted to the end section of a pair of skis (S) opposite to the tips, having a rotatably mounted roller (2, 15) which permits the ski end sections to be rolled on the ground when the tips are lifted, wherein the roller (2, 15) mounted in a holder (1), between two side cheeks (5, 6; 19, 20) extending downwards from a web (4), the holder (1) has stops (9, 10, 11, 12, 13) which are adapted to the contours of the lower ski sections and wherein, furthermore, a holding element (3) is provided, which secures the holder (1) to the end section of the pair of skis (S), characterized in that both side cheeks (5, 6; 19, 20) of the holder (1) are extended in the form of a tip (36) downwards under the lower roller rim for the purpose of preventing rolling-away of the skis when they are put down.

2. Ski-transporting device according to claim 1, characterized in that the roller axis (17) holding the roller (2, 15) is inserted into mounting bores (7, 8; 18) and that the side cheeks (5, 6; 19, 20) can be bent apart for mounting the roller (2, 15).

3. Ski-transporting device according to claim 1 or 2, characterized in that the stop (9) being in contact with the ski end edge is positioned below the roller axis (17).

1/2

FIG. 1

FIG. 5

FIG. 2

FIG. 3

FIG. 4